# EUROPEAN PATENT SPECIFICATION

(11) **EP 0 372 686 B1**
(45) Date of publication and mention of the grant of the patent: **23.02.1994**
(21) Application number: 89309460.7
(22) Date of filing: 18.09.1989
(51) Int. Cl.: G11B 5/23

(54) **Method of producing a ferrite magnetic head core**
Verfahren zur Herstellung eines Ferritmagnetkopfkernes
Méthode de production d'un noyau magnétique en ferrite

(30) Priority: 30.11.1988 US 277737
(43) Date of publication of application: 13.06.1990
(73) Proprietor: SEAGATE TECHNOLOGY INTERNATIONAL, Georgetown, Grand Cayman Island (KY)
(72) Inventor: Vadnais, Timothy Wayne, Victoria Minnesota 55386 (US); Hennenfent, Douglas Joseph, Minneapolis Minnesota 55428 (US); Ekern, Judy Marie-Anderson, Edina Minnesota 55435 (US)
(74) Representative: Miller, Joseph

(56) References cited:
- EP-A- 0 128 625
- PATENT ABSTRACTS OF JAPAN vol. 12, no. 175 (P-707)(3022) 25 May 1988;& JP-A-62285207
- IEEE TRANSACTIONS ON MAGNETICS,vol. MAG20, no. 5, September 1984, pages 1503 - 1505; E.B.RIGBY: "Diffusion bonding of NiZn ferrite and nonmagnetic materials"
- IBM TECHNICAL DISCLOSURE BULLETIN,vol. 21, no. 6, November 1978, Armonk,US;pages 2212-2213;W.D.KEHR et al.: "Ferrite-ferrite diffusion bonded recording head"
- IBM TECHNICAL DISCLOSURE BULLETIN,vol. 21, no. 11, April 1979, Armonk,US;page 4373, N.L.ROBINSON et al.: "Controlling minor bit by diffusion on magnetic heads"

## Description

The present invention concerns a method of producing a ferrite magnetic head core having a flux gap in the magnetic flux path thereof.

In the various conventional data recording systems based on the use of a magnetic medium, a magnetic transducer head is used to create magnetic patterns in the medium for recording data and to read back the data after recording it. The typical magnetic transducer head has an O-shaped core which produces a magnetic flux path including a flux gap across which flux fringing occurs. During reading and writing, the flux gap is placed in close proximity with the medium, and the medium is moved relative to the gap.

During writing, the fringing flux enters the medium, causing the magnetic patterns to be created therein. The flux flow for the writing process is created by means of a winding through which the flux path passes.

During reading, the medium is again moved relative to the flux gap, and the magnetic pattern in the medium causes a flow of flux in the flux path, which flux flow re-creates the magnetic pattern in the medium. By detecting this flux flow, i.e. converting it to an electrical signal, the original data can be recovered. Voltage across the same winding can be used to detect the flux flow, or a separate flux detecting element, such as a magneto resistive element, can be used.

There are two types of magnetic recording heads now in general use. The older type has a ferrite or other core providing the flux path and a separate wire winding for writing and reading. The newer type is formed by photo-lithographic processes and is typically referred to as a thin film recording head. The present invention is applicable to the ferrite core type of recording head.

The complete O-shaped core of a ferrite core head typically comprises a C core element, so called because it is in the shape of a C, and an I core element, so called because it has an elongated rectangular form in the shape of an I. The I and C core elements are attached to each other in some manner with the I core element bridging the arms of the C core element to complete the flux path. One of the junctions between these two elements forms the flux gap. Typically, the flux gap is provided by a hard non-magnetic material such as glass or alumina. The two facing surfaces of the I core element and the C core element which define the flux gap are called the gap faces.

In most applications and certainly for disk drives for digital storage of data, it is highly desirable to make the width of the flux gap (dimension of each gap face which is adjacent the medium and parallel to the medium surface) very small so that the magnetic patterns created by writing are confined to a very narrow track. By reducing the gap width to 0.025 mm (0.001 inches) or less for example, it is possible to space tracks of data on a disk so that one thousand or more are packed in a radius of 25 mm (1 inch). It is preferred to pack these tracks closely so as to increase the amount of data which a single disk drive unit can store, thereby increasing the compactness of the drive itself for a given data capacity. It also turns out in general that by increasing the capacity of a disk drive by increasing the density of data storage on the individual disks as technical advances allow, one can store data more cheaply on a cost per bit basis than is possible by simply increasing the number of disk drives in an installation.

To make the individual cores used for the heads, a C section bar whose cross section is uniform and identical to that of an individual C core element, is bonded to an I section bar whose cross section is the same as that of the individual I core elements. Usually the I and C section bars are from 50 to 100 times as long as the finished core width, with the gap width being substantially smaller than the core width. A thin layer of gap material is placed, now usually by a sputtering process, at the inter-face corresponding to the flux gap in the finished cores. The I section bar is then clamped to the C section bar across its arms to close the section into the shape of an O. The I section bar/C section bar assembly is then heated to a temperature sufficient to fuse the gap material to the adjacent I and C section bar gap faces, fixing the gap length (the length of the flux gap is the dimension in the direction of the flux flow in the core adjacent the gap, and is essentially the thickness of the gap material) and bonding the bars to each other in the O shape. The resulting assembled bar is then sawed transversely into individual cores which can be wound and mounted in a suitable support. For use in rigid disk drives, these cores are mounted in slots in hard ceramic sliders which are designed to fly aero-dynamically in close proximity to the disk surfaces in use.

The trend is to smaller gap lengths. By making the gap length very small, it is possible to write and read individual flux pattern changes, which are packed very closely together, increasing the amount of data which can be stored in a given length of track. Increasing this linear bit density again increases the overall capacity of a given area of medium to store data. Here too, it is usually economic to increase the linear bit density as far as the state of the art allows, since this results in reduced costs for storage of a given amount of data.

It is also necessary accurately to control the gap length, since the gap length inter-relates with the other dimensions and parameters of the medium, so that deviations from the design gap length can adversely affect performance. For example, incorrect gap length can substantially affect the flux pattern created during writing or the electrical signal generated during reading, causing data to be read incorrectly.

Control of the gap length has always been a difficult problem because of the small dimension involved. It is now customary to make the gap length of the order of about 0.5 micro-metres (20 micro-inches), and reliably reproducing such a small dimension in a manufacturing process is very difficult. The tolerances are now typically held to ±0.12 micro-metres (±5 micro-inches). In particular, when the I and C section bars must be bonded with the gap length controlled to within say .4 micro-metres to .6 micro-metres (15 micro-inches to 25 micro-inches) over perhaps fifty to one hundred core widths or 25 mm (1 inch), it is virtually certain, using current technology, that much of the gap length along the assembled bar will have an improper dimension.

This occurs for two reasons. In the first place, the two bars may have gap faces which have not been machined to inter-face within just a few fractions of a micro-metre of perfect contact along the entire length of the gap faces. This arises from unavoidable flaws in the lapping process, which is intended to produce perfectly flat gap faces on the I and C section bars. Secondly, clamping with the conventional point contact clamps followed by heating in the bonding step allows the individual bars to distort such that even an initially perfect and uniform contact becomes incorrect.

In either case, many of the individual cores which are later cut from the bars will have gaps with improper lengths, or the bonding between the gap material and the ferrite will be imperfect. These cores must be scrapped, since there is no way to correct these flaws. Thus it can be seen that current processes result in large numbers of defective cores which must be scrapped.

Although there is not a great amount of the total cost of a finished head expended at this stage of the manufacturing process, it is much better to have a high yield at this, and each, step of the process, since the likelihood of defective parts slipping through the inspection process after a step is done is reduced substantially whenever the process has only a small fraction of defective parts to begin with. In fact with sufficiently high yields, individual inspection of the parts after every step is unnecessary. And regardless of the cost of individual parts even at an early stage of the process, the defects are still an expense.

There are a number of different ways in which the flux gap may be formed in a manufacturing process. In one process, the I and C section bars are positioned so that the spacing between them is equal to the desired gap length. Molten glass is then applied to the gap so that capillary action draws the glass into the gap simultaneously both forming the flux gap and bonding the I and C section bars. Another way of forming the flux gap involves placing a glass foil between the I and C section bars to define the gap, and then heating the assembly and applying mechanical pressure to it to melt the glass and bond the bars mechanically. Yet another way is to place a glaze paste on the gap faces of the I and C section bars and then fuse the paste to the gap faces with heat to form the flux gap. Another process uses a non-magnetic and abrasion resistant layer to define the gap and then places a bonding material in the form of a thin cane or wire at the inner line of the gap within the I and C section bar assembly. Heat is then used to fuse or bond the bonding material to the I and C section bars. U.S. Patents Nos. 3,452,430, 3,550,264, 3,395,450, 3,375,575, 3,024,318, 3,117,367, 4,536,270, 3,233,308, 3,246,383, 3,767,497 and 3,333,332 disclose these processes with a number of variations. In all of these processes, the inability accurately to control the viscosity of the glass gap material by control of the temperature, and the variation of the pressure along the I and C section bars inter-face during bonding results in gap lengths which are difficult to control sufficiently to achieve high yields.

A later approach, as was briefly mentioned earlier, forms the gap from alumina rather than glass. Alumina being very hard, is fully the equal of glass as far as resistance to erosion and under-cutting during machining or abrasive contact in use is concerned. But alumina has the additional advantage of chemical and mechanical stability during the relatively high temperature bonding process. Glass tends to flow under pressure and heat, and with the extremely small gap lengths involved, results in very variable gap lengths. Alumina, however, is much more stable. The alumina gap material is sputtered onto one or both gap faces of the I and C section bars, as is explained in U.S. Patent No. 4,536,270. Sputtering is inherently capable of depositing very accurate, uniform and repeatable layer thicknesses. When formed by sputtering, alumina layers, or layers of any material for that matter, are strongly adherent and completely conform to the substrate surface.

The present conventional processes then use a thin layer of bonding glass sputtered on at least one of the surfaces to be joined, and the I and C section bars properly juxtaposed are subjected to heat and pressure to complete the bond. Unfortunately, to bond alumina requires a relatively high temperature, leading to dissolving of the ferrite of the bonding glass, and an indeterminate gap length. On the other hand, avoiding this problem by use of very thin layers of glass as the bonding agent between the alumina and the other face makes it difficult to assure that solid bonding occurs along the entire length of the bars because of the hardness of the alumina. This is because of unavoidable spacing variations or voids between the two faces at which the bonding occurs, due to mechanical and thermal stresses and imperfections in the lapping process preventing precise flatness of the surfaces to begin with. The mechanical rigidity of the alumina prevents its flowing to fill the voids between the bonding faces as does glass, in effect substituting one disadvantage for another.

As a general observation, it is desirable to effect the conventional core assembly process with as low temperatures as possible to avoid the possibilities of damaging the magnetic properties of the ferrite or causing mechanical damage through thermal stress. This also reduces the magnitude of reaction between the ferrite and any adjacent dis-similar material. It is known that core bonding at a relatively low temperature can be done by increasing the pressure between the faces of the parts to be joined at the bonding inter-face of the parts. This is called diffusion bonding or thermal compression bonding. Such processes are described in U.S. Patent No. 3,672,045 and in IBM Technical Disclosure Bulletins Vol. 20, No. 10, March 1978, p.4088, by Daniels et al., "Diffusion Bonding of Dissimilar Ceramics"; Vol. 21, No. 6, November 1978, pp. 2212 to 2213, by Kehr et al., "Ferrite-Ferrite Diffusion-Bonded Recording Head"; and Vol. 24, No. 3, August 1981, p. 1496 by Chow et al., "Diffusion Bonding Fixture".

However, it remains difficult to cause the individual surfaces of a pair of ferrite bars to contact each other intimately along the entire length of their bonding inter-face, and if there is not this intimate contact the bond is faulty. A solution to this problem is provided in IEEE Transactions on Magnetics, Vol. MAG-20, No. 5, September 1984, pp. 1503 to 1505, by Rigby, "Diffusion Bonding of NiZn Ferrite and Non-Magnetic Materials", where what will hereafter be referred to as a "granule vice" is described. By burying a pair of ferrite bars with their surfaces to be bonded juxtaposed, in a volume of hard, heat resistant granules contained in a cylinder bore and then powerfully compressing the granules with a piston driven into the bore, the bars are strongly forced against each other. By applying heat to the bars after thus pressing them against each other, high quality diffusion bonding can be effected along the entire length of the bonding surface of the bars.

Some of the described problems of variable gap length in present ferrite core manufacturing processes can be overcome by using the technical advances described above in combination with a unique design in accordance with the invention for the ferrite bar pieces to be bonded. We have found that the problem of variable gap length along the length of the bar can be solved by forming the bond at a joint between the ferrite bar pieces within magnetic material of one of the pieces rather than at a gap face or within the gap.

Accordingly, the present invention provides a method of producing a ferrite magnetic head core having a flux gap in the magnetic flux path thereof, in which the head core is cut from a bar having an O-shaped cross section and comprising first and second ferrite pieces having opposed faces including the flux gap there-between, the method comprising depositing a hard non-magnetic layer on the face of one of the ferrite pieces, and being characterised by depositing on the hard non-magnetic layer a layer of a magnetic material, and bonding the layer of magnetic material to the face of the other of the ferrite pieces by clamping the two ferrite peices with the layer of magnetic material opposing the face of the other of the ferrite pieces and by heating the face of the other of the ferrite pieces and the layer of magnetic material adjacent the face of the other of the ferrite pieces to a bonding temperature of at least a predetermined level and applying a clamping pressure between the layer of magnetic material and the face of the other of the ferrite pieces of at least a predetermined level after the bonding temperature is reached.

The invention allows the use of highly accurate sputtering to set the gap length. Errors which occur in the final length of the magnetic material where the bonding occurs adjacent the gap have no effect on the magnetic performance of the core. Of course, there can be no voids in this area, or a second flux gap will occur, resulting in poor magnetic performance.

The method according to the invention in its preferred form described below involves first depositing a hard non-magnetic layer such as alumina to form the flux gap, on a flux gap face of either an I or C section ferrite bar piece. Then, a layer of magentic material bondable to ferrite through the application of heat and pressure above predetermined levels (diffusion bonding) is deposited onto the hard, non-magnetic gap material. The face of the other bar piece at which the bond will occur then becomes simply a bonding inter-face area rather than functioning as a face on one of the bar pieces which defines the flux gap. After the ferrite pieces are mated with the bonding inter-face area of the one ferrite piece in facing and juxtaposed position with the face of the deposited magnetic material layer, clamping pressure of at least the predetermined level is applied to the two ferrite pieces so as to clamp the bonding inter-face area and the deposited magnetic material face against each other. While so clamping the ferrite pieces, the bonding inter-face area and the layer of sputtered magnetic material adjacent to the joint face are heated to at least the predetermined bonding temperature to thereby bond the deposited magnetic material to the other ferrite piece at the bonding interface area.

Sputtering to form the layers is preferred because this allows very accurate control of the thickness of each layer, and sputtered layers are strongly adherent to the substrate surface. However, it is possible that other deposition techniques may eventually prove superior to sputtering.

One potential problem with the process is that because at the bonding inter-face neither the ferrite bar piece nor the deposited magnetic material flow very much at a temperature below that which can damage the magnetic characteristics of the ferrite, it is difficult to form along the bonding joint a continuous bond which is mechanically strong and has no voids. And to assure mechanical strength and magnetic continuity of the joint along the entire bar, it is necessary for there to be intimate and uniform contact between the I and C section bar pieces along the entire length of the joint face. Conventional clamping mechanisms have problems in overcoming small deviations from perfect flatness along the entire bonding interface to generate the specified pressure at all points along the bonding inter-face. (The term "pressure" as used in this description has its technical meaning of force per unit area). The use of the granule vice described above allows uniform pressure of the proper level to be applied along the entire bonding inter-face so as to form a bond which is satisfactory from both mechanical and magnetic standpoints.

It is also possible to use the present process where a high permeability insert is placed adjacent the gap to improve head performance. If this high permeability insert is formed of Sendust (trade mark) (iron-silicon-aluminum), it reacts with the ferrite to form alumina at the bonding inter-face during the high temperature of the bonding. By separating the Sendust (trade mark) with a barrier layer from the ferrite to form the bonding face, this secondary gap of alumina is substantially avoided.

The present invention thus provides a method by which the gap lengths in individual cores may be accurately controlled.

According to the invention, the bonding inter-face between individual ferrite bar pieces from which head cores are cut is formed at a place other than at the flux gap.

By means of the invention it is possible to use high permeability materials adjacent to the flux gap, and to avoid the need of using temperatures which may damage the magnetic materials magnetic properties.

The invention will be described further, by way of example, with reference to the accompanying drawings, in which:-
Figure 1 is a perspective view of a ferrite head core;
Figure 2 is a perspective view of ferrite C and I section bars aligned for bonding in the method according to the invention;
Figure 3 is a fragmentary view of a flux gap area of the ferrite head core (or ferrite bars) including a ferrite or Permalloy (trade mark) insert;
Figure 4 is a fragmentary view of a flux gap area of the ferrite head core (or ferrite bars) including a high permeability insert and a barrier insert;
Figure 5 is a schematic view of a granule vice or clamp for use in the method according to the invention;
Figure 6 is a graph of the operating ranges for temperature and pressure necessary to form acceptable bonds between the specified materials.

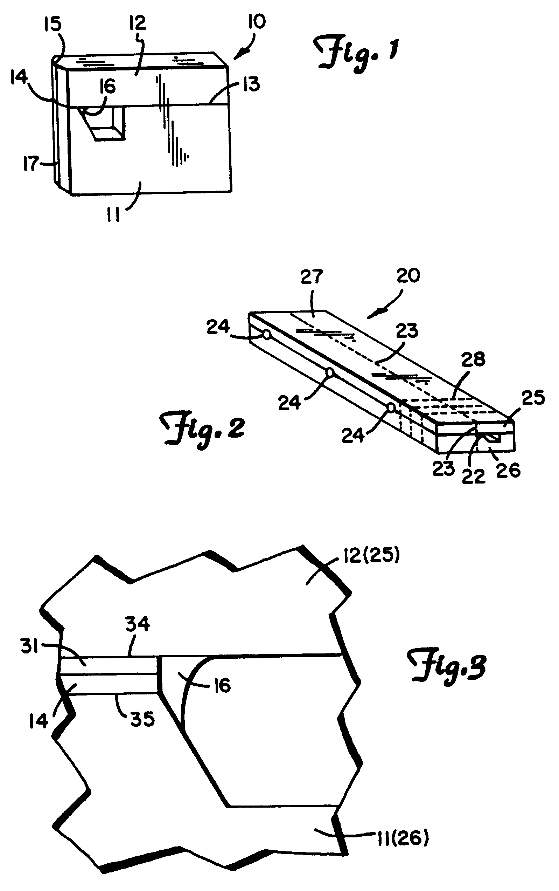

A ferrite magnetic transducer head core 10 as shown in Figure 1 and manufactured by the method according to the invention is formed of a C core element 11 and a I core element 12, which are bonded adjacent a flux gap 14 and a back gap 13 within or between magnetic material, to form an O-shaped magnetic flux path. The core is typically mounted in a carrier, which for a hard disk drive is a flyer, and there is given its final lapping which sets the height of the flux gap. (The height is the vertical dimension of the flux gap 14 in Figure 1). The core 10 is shown unmounted for ease of understanding. It is preferred to keep the back gap 13 as short as possible to reduce the total magnetic reluctance of the flux path in the core 10. The flux gap 14 on the other hand is designed with a pre-selected length as explained above and is formed through most of its length from alumina or some other had non-magnetic material which is stable under high temperature and pressure. (The length of the gap 14 is the spacing between the faces of high permeability material defining the sides of the flux gap). The core 10 is very small, perhaps about 0.1 to 0.2 mm (a few thousandths of an inch) thick and less than 2.5 mm (0.1 inch) in each of its long dimensions.

A transducing surface 17 is in use juxtaposed to a moving recording surface in order to effect reading and writing of data or other information. It is the usual practice to chamfer the edges of the transducing surface 17 as shown in order to reduce the width of the flux gap 14 in the vicinity of the recording surface and allow increased density of information storage without substantially increasing the reluctance of the flux path. Each turn of a winding eventually added to the core passes through a window 15 as is of course well known.

During manufacturing, each core 10 is initially a part of a bar 20 of O-shaped section shown in Figure 2, which is assembled by bonding a C section bar 26 to an I section bar 25 in the method according to the invention. Individual cores 10 are shown in Figure 2 separated by dotted line curves 28, which indicate where a saw will cut to form the individual cores 10. Dotted lines 23 indicate where a rough cut of the bar 20 occurring before the individual cores 10 are cut from the bar 20 places the gap height for the individual cores 10 near the final value. The C section bar 26 is bonded to the I section bar 25 at a back gap inter-face 23 and, in a critical deviation from previous practice, adjacent to, rather than at a flux gap section 22 itself. Referring again to Figure 1, the bond in the section of the core 10 containing the flux gap 14 serving to permanently attach the two core elements 11 and 12 to each other has, when the core is manufactured according to the invention, a location other than at an edge surface or or within the flux gap 14 itself.

Our experimentation has clearly shown that given proper levels of temperature and pressure, it is possible to form an acceptable diffusion or thermal compression bond directly between manganese-zinc ferrite (53% Fe₂O₃, 30% MnO and 17% ZnO, all by mol percentage) and any of at least three high permeability magnetic materials commonly used as magnetic core materials, all without exceeding a temperature which may affect the magnetic characteristics of the ferrite. These materials are manganese-zinc ferrite itself, Permalloy (trade mark) and Sendust (trade mark). It is reasonable to expect that many other types of magnetic ferrite can also be bonded in this manner, since we believe the phenomenon is not a function of the manganese and zinc in the mixture. Thus, many types of magnetic ferrite can, at a temperature low enough to prevent de-composition of the ferrite, be bonded to a similar ferrite without any additional bonding agent. It has been our experience, however, that alumina will not form a bond with ferrite at any temperature below the de-composition temperature of ferrite. Therefore, it is not possible to bond alumina directly to ferrite, whereby according to this invention the bond is made between magentic material sputtered on the sputtered alumina, and a ferrite bar surface.

However, because of the dimensional stability (resistance to softening) of such materials as ferrite and Sendust (trade mark) at temperatures which are low enough to leave the magnetic characteristics of these materials unaffected, to assure that there are no voids in the final bond interface which may act as a secondary flux gap, it is desirable to create high, uniform contact pressure at all points along the entire length of the bonding interface. This is achieved by the use of the granule clamp described above.

In order further to mechanically strengthen the bond between the cores, it is preferable to melt a glass cane or rod 16 as shown in Figure 1 in the fillet area of the bar 20 (Figure 2) adjacent the flux gap inter-face 22 before the bonding operation to provide filler material.

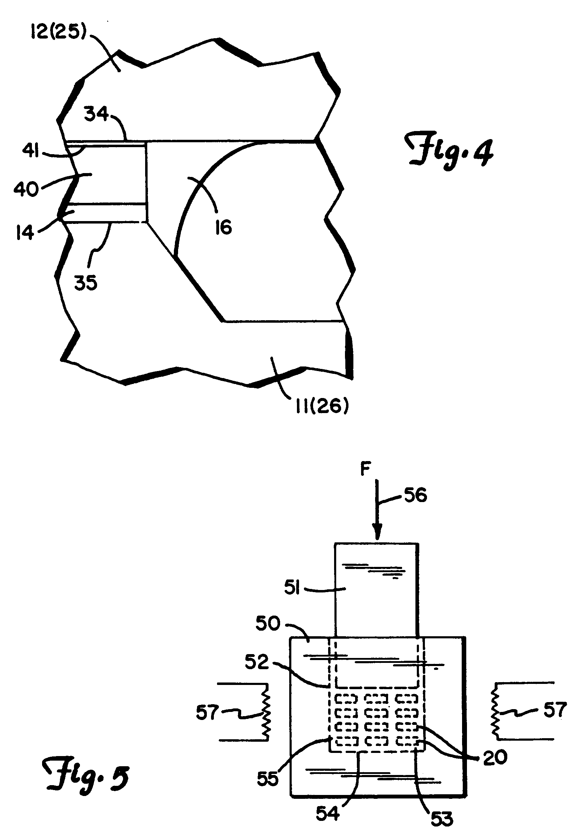

Figures 3 and 4 show in detail the core structure adjacent the flux gap 14, including a magnetic layer 31, and may be considered to show either a sectional view of the area adjacent the flux gap 14 of the core 10 in Figure 1 or adjacent the gap inter-face 22 of the bar 20 in Figure 2. The C section bar 26 and the I section bar 25 in Figure 3 are thus the pictorial equivalent of the C core element 11 and the I core element 12 in Figure 1. The layer 31 in Figure 3 comprises a short or thin (of the order of .5 micro-metres to 1.0 micro-metres (20 to 40 micro-inches) layer of ferrite or Permalloy (trade mark) which is sputtered onto the alumina layer 14 which serves as the flux gap. In Figure 4, a high permeability layer 40 formed from a material such as Sendust (trade mark) having a higher permeability than ferrite is provided and will act in a known manner in use to concentrate the magnetic flux during writing to allow the magnetic head of which the core 10 forms a part to be used with the desirable higher coercivity recording media. A suitable length (i.e. thickness) for the layer 40 made from Sendust (trade mark) for flux concentration can range from 2.5 micro-metres to 3.75 micro-metres (100 micro-inches to 150 micro-inches). It is preferable also to place a short layer 41 of barrier material on the Sendust (trade mark) to prevent the formation of alumina in the vicinity of the face 34 of the I core element 12, which alumina may function as a secondary gap to distort the signal during reading. The layer 41 may be from 0.05 micro-metres to 0.1 micro-metres (2 micro-inches to 4 micro-inches) long.

The perform the gap forming and core element bonding operation, the C section bar 26 is placed in a sputtering chamber and a layer of alumina is sputter deposited to a depth of approximately 0.5 micro-metres (20 micro-inches) on the gap face 35 of the C section bar 26 corresponding to the flux gap face area of the C core element 15. The importance of shielding the back gap area 23 of the I section bar 25 to prevent any alumina from being deposited on it which will increase the reluctance of the finished cores 10 is well known. Sputtering is the preferred means of depositing the alumina because, as explained earlier, it forms a layer of precise thickness which tightly adheres to the substrate surface. Sputtering allows easy control of the quality of the deposited material and the process is inherently suited to production of a large number of individual pieces.

A layer of magnetic material 31 or 40 is then deposited, preferably by sputtering, onto the alumina layer 14 to the depth specified. When high permeability Sendust (trade mark) is used as a flux enhancing layer then the barrier material as a third layer 41 is sputtered to the stated depth of approximately 0.05 micro-metres to 0.1 micro-metres (2 micro-inches to 4 micro-inches) on the high permeability Sendust (trade mark) layer. This barrier layer may be be Permalloy (trade mark) or even a non-magnetic material such as silicon nitride, silicon dioxide, or titanium. Since the barrier layer is so thin, it does not appreciably affect the electrical performance of the core 10. Thus, any of these low permeability materials may be considered to have high permeability when sputtered on Sendust (trade mark) in the very thin layers specified.

After the layers in the gap interface 22 are deposited as just described, the C section bar is juxtaposed to the bonding inter-face area 34 on the I section bar 25 in the position shown in Figure 2 using an assembly jig whose design is not relevant to the present invention. To maintain the correct positional relationship between the C and I section bars 26 and 25 after being so juxtaposed, temporary adhesive patches 24 shown in Figure 2 may be used to attach the bars to each other. The adhesive may be any kind which is vapourised by temperatures at which the permanent bonding of the C and I section bars 26 and 25 to each other occurs. Cyano-acrylates, known popularly as "super glues" are preferred.

Once the C and I section bars 26 and 25 have been bonded temporarily to each other, the permanent bonding steps can begin. As mentioned earlier, it is necessary to apply large uniform clamping pressure along the entire gap inter-face 22 of the bar 20 during the time when the actual bond is formed. To accomplish this, the granule clamp or vice shown in Figure 5 is used. This clamp includes a strong cylinder block 50 having side walls 52 and a bottom 54 defining a cylindrical cavity 55 open at its top and at least partly filled with a quantity of hard, heat resistant granules 53. A pressure die or piston 51, having an external shape conforming to the internal shape of the cavity 55, slides with a small clearance from the walls 52 along the axis of and within the cavity 55. The block 50 and the piston 51 may be made from silicon carbide or other hard, heat resistant material, and the granules 53 may be a heat resistant ceramic approximately 1.25 mm to 2.0 mm (0.05 inches to 0.08 inches) in maximum dimension. Pressure application means for exerting a force on the piston 51 are shown schematically by a force vector 56, and may comprise a mechanical jack or other device. heaters 57 are placed adjacent the block 50 and are able to raise the temperature of the granules 53 to at least 500°C or so.

A number of assembled bars 20 with the temporary adhesive patches 24 holding the I and C section bars 25 and 26 together as shown in Figure 2 are completely embedded in the granules 53 as shown. The bars 20 should preferably be oriented with the plane of the flux gap inter-face 22 normal to the axis of the cavity 55.

To use the granule clamp, the bottom of the cavity 55 is covered with a thin layer of the granules 53. A number of the bars 20 held together with temporary adhesive, or other workpieces to be clamped, are laid on the surface of the granules 53, and are covered with more of the granules 53. More workpieces can be added to the cavity 55 and in turn covered with the granules 53, until the capacity of the cavity 55 is reached. After all the bars 20 are in place and covered with the granules, the die 51 is inserted in the cavity. Then the pressure application means are activated to drive the piston 51 into the granules 53. The amount of force which must be exerted on the surface of the granules 53 is dependent on the amount of pressure required at the outer surface of the bars 20. (Pressure is used in the technical sense of force per unit area). Essentially, the pressure which the piston 51 imposes on the granules 53 is equal to the pressure desired on the bars 20. For example, if the desired pressure on the bars 20 is 7 kpa (100 psi) and the area in the opening in the cavity is 55 is 322 cm² (50 inches²) then the pressure application means must exert 22,240 Newtons (5,000 pounds force) on the piston 51. Because the pressure exerted by the piston 51 is transmitted isostatically throughout the granules 53 and the cavity 55, the pressure at the surface of the granules 53 is identical to that everywhere within the cavity where the granules are present. Because of the friction between individual granules 53, however, the horizontal forces (as viewed in Figure 5) exerted by the granules may be less than the vertical forces. Thus, for consistent results in terms of bonding pressure from one batch of the bars 20 to another and from one bar 20 the another within a single batch, the orientation of the flux gap inter-face 22 normal to the axis of the cavity 55 is preferred.

If the area of the I section bar 25 within the window of the C section bar 26 as shown in Figure 2 is a substantial percentage of the total contact area of the I section bar 25 with the C section bar 26, it is necessary to reduce the force applied to the piston 51 by the ratio of the total contact area to the outside area of the surface 27 of the I section bar 25. Where there is a relatively wide range allowed for bonding pressure and the area of the I section bar 25 within the window or opening in the C section bar 26 is only a small percentage of the total area of the bar's end face, this correction may be ignored.

It turns out that the granule clamp of Figure 5 has the capability to re-create very uniform high pressure at the gap inter-face 22 along the entire length of the bar 20. That is, the force per unit area at all points along the gap inter-face 22 is very nearly constant as a function of position. Furthermore, this pressure can be varied from one type of workpiece to another, or even changed during a single process step if desirable. Of course, if there are a number of workpieces in a single clamp, the pressure changes are created for all of the workpieces simultaneously.

In the specific process developed to bond the ferrite bars 20, after the individual bars have been placed in the granule clamp of Figure 5 as explained, a slight pre-load of several kpa (a few psi) is imposed on the piston 51 to prevent any shifting of the individual bars within the granules 53. The heaters 57 are turned on and the bars are brought to the bonding temperature. After the bonding temperature is reached, then the pressure is applied to the piston 51 by the pressure application means for about fifteen to thirty minutes. After the time has elapsed, the pressure is reduced to the pre-load value and the bars 20 are allowed to cool. It is necessary to apply the bonding pressure after the bars have been heated to the bonding temperature to prevent cracking. It is also difficult to maintain the required pressure on the piston 51 when the temperature of the granules 53 is changing and the granules are therefore thermally expanding.

This process results in a great improvement in accurately maintaining flux gap length while bonding the I section bars 25 to the C section bars 26. This makes the process described very cost effective.

While the process described above provides that the gap material is sputtered on the face 35 of the C section bar 26, it is also possible to sputter the gap material on the face 34 of the I section bar 25, and then to provide a bond between the high permeability material layer and the face 35 of the C section bar 26. There are some limitations, however. When a Sendust (trade mark) layer 40 is deposited, this must trail the gap 14 with respect to the moving medium in use in order to make full use of the high permeability. It is the usual practice for the I core element 12 to trail the C core element 11, so if this relationship is to exist, then the relationship between the individual layers must be as shown. However, if Permalloy (trade mark) or ferrite is used for the layer 31, then the gap material may be sputtered on either the I section bar 25 or the C section bar 26, the high permeability material being sputtered on the gap material and then the bonding being effected between the high permeability layer 31 and the C section bar 26.

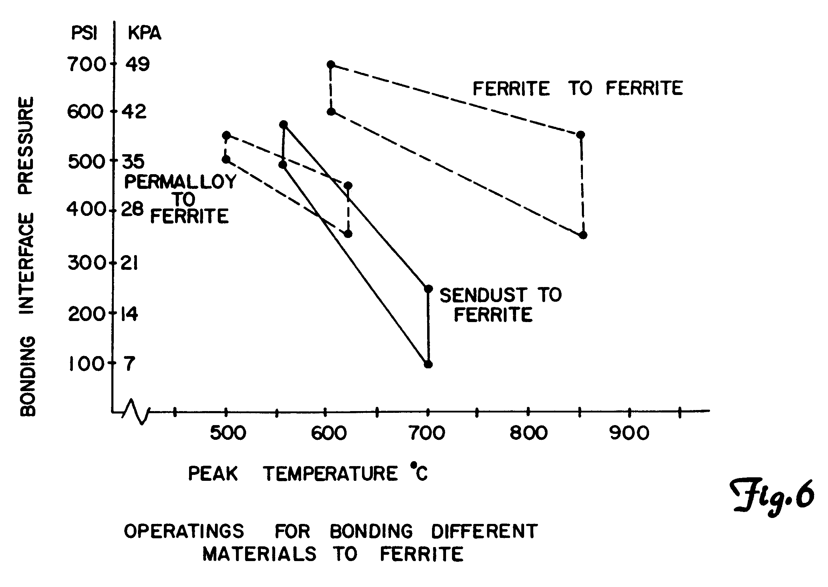

The exact or preferred ranges of temperature and pressure for effecting high quality bonding are discussed below. In Figure 6, the three areas within the closed curves shown specify the ranges as measured at the bonding inter-faces of the bars 20, for temperature and pressure required for forming satisfactory bonds in a manganese zinc ferrite magnetic head, between the different combinations of inter-face materials stated. Not every point at the periphery of the individual areas has been tested, but the ranges are, based on substantial experimentation and best engineering judgement, believed to be accurate. However, not every point at the edges of the ranges may be fully satisfactory at the time duration specified. Conversely, it should also be noted that certain parts of these rainges may be conservative, and satisfactory bonding may occur outside the applicable curve.

The pressure specified in Figure 6 is that actually generated at the inter-face and, if the inter-face pressure differs substantially from the pressure measured at the face of the piston 51, must be corrected as described above. The time for maintaining these conditions for satisfactory results is of the order of fifteen to thirty minutes as explained in the description of the bonding process.

These ranges are also subject to variations from batch to batch of a given pair of materials as a result of variations in the shape or chemical make-up of the materials involved or in the surface geometry at the bonding inter-face. In this respect, note that even within the family of ferrite materials, there are a large number of variations in structure and constituents, some deliberately created for varied magnetic or mechanical properties and others accidental or simply inexplicable, which may well cause variations in bonding activity. That is, different ferrite, Sendust (trade mark) or Permalloy (trade mark) materials may well react to the bonding process differently. Thus, a small amount of experi-mentation within or close to the ranges shown may be required to optimise a particular operation.

These ranges are quite wide and the granule vice described above efficiently and uniformly transmits pressure (and allows good heat transfer) to all of the workpieces involved in a single compression or clamping process. This means that when simultaneously clamping a number of ferrite head bar workpieces during a bonding process using this granule vice, maintaining every workpiece well within any of the specified ranges is easy to do.

The ranges shown in Figure 6 can be stated verbally as follows: for ferrite to Sendust (trade mark) bonds, the pressure and temperature should be maintained within or close to the range defined by, on the pressure versus temperature graph of Figure 6, a closed curve comprising a quadri-lateral shape having corners at about: 35.2 kpa i.e. kilo-pascals (500 psi) and 550°C, 40.5 kpa (575 psi) and 550°C, 17.6 kpa (250 psi) and 700°C, and 7 kpa (100 psi) and 700°C. For ferrite to ferrite bonds, the pressure and temperature should be maintained within or close to the range defined by, on the pressure versus temperature graph of Figure 6, a closed curve comprising a quadrilaterial shape having corners at about 42.2 kpa (600 psi) and 600°C, 42.2 kps (600 psi) and 700°C, 38.7 kpa (550 psi) and 850°, and 24.6 kpa (350 psi) and 850°C. For ferrite to Permalloy (trade mark) bonds, the pressure and temperature should be maintained within or close to the range defined by, on the pressure versus temperature graph of Figure 6, a quadri-lateral shape having corners at about: 35.2 kpa (500 psi) and 500°C, 38.7 kpa (550 psi) and 500°C, 31.7 kpa (450 psi) and 625°C, and 24.6 kpa (350 psi) and 625°C.

The increased yield in the bonding step where the individual bars are formed, reduces the likelihood that post-bonding inspection will allow defective bars through to the sawing steps where the individual cores are formed. Thus, the advantage of this invention is not merely that the yield is increased at this relatively early stage in the process, but that the yield is substantially improved at later stages as well because the likelihood of defective cores infecting the subsequent steps in the process is reduced.

## Claims

1. A method of producing a ferrite magnetic head core (10) having a flux gap (14) in the magnetic flux path thereof, in which the head core is cut from a bar (20) having an O-shaped cross section and comprising first and second ferrite pieces (25, 26) having opposed faces (34, 35) including the flux gap there-between, the method comprising depositing a hard non-magnetic layer (14) on the face of one of the ferrite pieces, and being characterised by depositing on the hard non-magnetic layer a layer (31, 40) of a magnetic material, and bonding the layer of magnetic material to the face of the other of the ferrite pieces by clamping the two ferrite pieces with the layer of magnetic material opposing the face of the other of the ferrite pieces and by heating the face of the other of the ferrite pieces and the layer of magnetic material adjacent the face of the other of the ferrite pieces to a bonding temperature of at least a predetermined level and applying a clamping pressure between the layer of magnetic material and the face of other of the ferrite pieces of at least a predetermined level after the bonding temperature is reached.

2. A method according to claim 1 characterised in that the magnetic material comprises a magnetic Fe-Si-Al alloy, the clamping step includes the application of a clamping pressure of at least about 24.6 kpa (350 psi), and the heating step includes heating to a temperature of at least 500°C.

3. A method according to claim 2 characterised in that the clamping pressure and the temperature are maintained within the range defined, on a pressure versus temperature graph, by a quadri-lateral shape having corners at about: 35.2 kpa (500 psi) and 550°C, 40.5 kpa (575 psi) and 550°C, 17.6 kpa (250 psi) and 700°C, and 7 kpa (100 psi) and 700°C.

4. A method according to claim 1 characterised in that the magnetic material comprises ferrite, the clamping step includes the application of a clamping pressure of at least about 24.6 kpa (350 psi), and the heating step includes heating to a temperature of at least 600°C.

5. A method according to claim 4 characterised in that the clamping pressure and the temperature are maintained within the range defined, on a pressure versus temperature graph, by a quadri-lateral shape having corners at about: 42.2 kpa (600 psi) and 600°C, 42.2 kpa (600 psi) and 700°C, 38.7 kpa (550 psi) and 850°C, and 24.6 kpa (350 psi) and 850°C.

6. A method according to claim 1 characterised in that the magnetic material comprises a nickel-iron alloy, the clamping step includes the application of a clamping pressure of at least about 35.2 kpa (500 psi), and the heating step includes heating to a temperature of at least 500°C.

7. A method according to claim 6 characterised in that the clamping pressure and the temperature are maintained within the range defined, on a pressure versus temperature graph, by a quadri-lateral shape having corners at about: 35.2 kpa (500 psi) and 500°C, 38.7 kpa (550 psi) and 500°C, 31.7 kpa (450 psi) and 625°C, and 24.6 kpa (350 psi) and 625°C.

8. A method according to any preceding claim characterised in that the layer of magnetic material is deposited by sputtering.

9. A method according to any preceding claim further characterised by depositing a barrier layer on the layer of magnetic material before bonding the layer of magnetic material to the face of the other of the ferrite pieces.

## Patentansprüche

1. Verfahren zur Herstellung eines Ferritmagnetkopfkerns (10) mit einem Magnetflußspalt (14) in seinem Magnetflußpfad, bei dem der Kopfkern von einem Stab (20) abgeschnitten wird, der einen O-förmigen Querschnitt aufweist und erste und zweite Ferritteile (25,26) mit einander gegenüberliegenden Flächen (34,35) umfaßt, die den Magnetflußspalt zwischen sich einschließen, wobei das Verfahren die Abscheidung einer harten nichtmagnetischen Schicht (14) auf die Fläche eines der Ferritteile umfaßt,
dadurch gekennzeichnet, daß auf der harten nichtmagnetischen Schicht eine Schicht (31,40) aus einem magnetischen Material abgeschieden und die Schicht aus magnetischem Material mit der Fläche des anderen der Ferritteile dadurch verbunden wird, daß die beiden Ferritteile zusammengeklemmt werden, wobei die Schicht aus magnetischem Material der Fläche des anderen der Ferritteile gegenüberliegt, und daß die Fläche des anderen der Ferritteile und die Schicht aus magnetischem Material benachbart zur Fläche des anderen der Ferritteile auf eine Verbindungstemperatur mit zumindestens einem vorgegebenen Wert erhitzt und ein Klemmdruck zwischen der Schicht aus magnetischem Material und der Fläche des anderen der Ferritteile mit zumindestens einem vorgegebenen Wert ausgeübt wird, nachdem die Verbindungstemperatur erreicht wurde.

2. Verfahren nach Anspruch 1,
dadurch gekennzeichnet, daß das magnetische Material eine magnetische Fe-Si-Al-Legierung umfaßt, daß der Klemmschritt die Anwendung eines Klemmdruckes von zumindestens ungefähr 24,6 kpa (350 psi) einschließt, und daß der Erhitzungsschritt die Erhitzung auf eine Temperatur von zumindestens 500°C einschließt.

3. Verfahren nach Anspruch 2,
dadurch gekennzeichnet, daß der Klemmdruck und die Temperatur in einem Bereich gehalten werden, der auf einer Druck-/Temperatur-Darstellung durch eine vierseitige Form umgrenzt ist, die Ecken bei ungefähr: 35,2 kpa (500 psi) und 550°C, 40,5 kpa (575 psi) und 550°C, 17,6 kpa (250 psi) und 700°C sowie 7 kpa (100 psi) und 700°C aufweist.

4. Verfahren nach Anspruch 1,
dadurch gekennzeichnet, daß das magnetische Material Ferritmaterial umfaßt, daß der Klemmschritt die Anwendung eines Klemmdruckes von zumindestens ungefähr 24,6 kpa (350 psi) einschließt, und daß der Erhitzungsschritt die Erhitzung auf eine Temperatur von zumindestens 600°C einschließt.

5. Verfahren nach Anspruch 4,
dadurch gekennzeichnet, daß der Klemmdruck und die Temperatur in einem Bereich gehalten werden, der auf einer Druck-/Temperatur-Darstellung durch eine vierseitige Form umgrenzt ist, die Ecken bei ungefähr: 42,2 kpa (600 psi) und 600°C, 42,2 kpa (600 psi) und 700°C, 38,7 kpa (550 psi) und 850°C sowie 24,6 kpa (350 psi) und 850°C aufweist.

6. Verfahren nach Anspruch 1,
dadurch gekennzeichnet, daß das magnetische Material eine Nickel-Eisen-Legierung umfaßt, daß der Klemmschritt die Anwendung eines Klemmdruckes von zumindestens 35,2 kpa (500 psi) einschließt, und daß der Erhitzungsschritt die Erhitzung auf eine Temperatur von zumindestens 500°C einschließt.

7. Verfahren nach Anspruch 6,
dadurch gekennzeichnet, daß der Klemmdruck und die Temperatur in einem Bereich gehalten werden, der auf einer Druck-/Temperatur-Darstellung durch eine vierseitige Form umgrenzt ist, die Ecken bei ungefähr: 35,2 kpa (500 psi) und 500°C, 38,7 kpa (550 psi) und 500°C, 31,7 kpa (450 psi) und 625°C sowie 24,6 kpa (350 psi) und 625°C aufweist.

8. Verfahren nach einem der vorhergehenden Ansprüche,
dadurch gekennzeichnet, daß die Schicht aus magnetischem Material durch Aufsprühen abgeschieden wird.

9. Verfahren nach einem der vorhergehenden Ansprüche,
dadurch gekennzeichnet, daß eine Sperrschicht auf der Schicht aus magnetischem Material abgeschieden wird, bevor die Schicht aus magnetischem Material mit der Fläche des anderen der Ferritteile verbunden wird.

## Revendications

1. Procédé pour fabriquer un noyau de tête magnétique en ferrite (10) présentant un entrefer (14) dans le trajet du flux magnétique de ce noyau, dans lequel le noyau de la tête est découpé dans une barre (20) ayant une section transversale en forme de O et comprenant une première et une seconde pièces en ferrite (25, 26) présentant des faces opposées (34, 35) entre lesquelles se trouve l'entrefer, le procédé consistant à déposer une couche dure non magnétique (14) sur la face de l'une des pièces en ferrite, caractérisé par le dépôt sur la couche dure non magnétique d'une couche (31, 40) en matériau magnétique, et la fixation de la couche de matériau magnétique sur la face de l'autre des pièces en ferrite en serrant les deux pièces en ferrite avec la couche de matériau magnétique opposée à la face de l'autre des pièces en ferrite et en chauffant la face de l'autre des pièces en ferrite ainsi que la couche de matériau magnétique adjacente à la face de l'autre des pièces en ferrite jusqu'à une température de liaison ayant au moins un niveau prédéterminé et en appliquant une pression de serrage, entre la couche de matériau magnétique et la face de l'autre des pièces en ferrite, au moins égale à un niveau prédéterminé lorsque la température de liaison a été atteinte.

2. Procédé selon la revendication 1, caractérisé en ce que le matériau magnétique est constitué d'un alliage magnétique Fe-Si-Al, l'étape de serrage comprenant l'application d'une pression de serrage d'au moins environ 24,6 kPa (350 livres par pouce carré), et l'opération de chauffage comportant un chauffage jusqu'à une température d'au moins 500 °C.

3. Procédé selon la revendication 2, caractérisé en ce que la pression de serrage et la température sont maintenues dans la zone définie, sur un graphe de pression en fonction de la température, par une forme de quadrilatère dont les sommets correspondent à environ : 35,2 kPa (500 livres par pouce carré) et 550 °C, 40,5 kPa (575 livres par pouce carré) et 550 °C, 17,6 kPa (250 livres par pouce carré) et 700 °C, et 7 kPa (100 livres par pouce carré) et 700 °C.

4. Procédé selon la revendication 1, caractérisé en ce que le matériau magnétique est constitué par une ferrite, en ce que l'étape de serrage comprend l'application d'une pression de serrage d'au moins 24,6 kPa environ (350 livres par pouce carré), et en ce que l'étape de chauffage comprend un chauffage jusqu'à une température d'au moins 600 °C.

5. Procédé selon la revendication 4, caractérisé en ce que la pression de serrage et la température sont maintenues dans la zone définie, sur un graphe de pression en fonction de la température, par la forme d'un quadrilatère dont les sommets se situent à environ : 42,2 kPa (600 livres par pouce carré) et 600 °C, 42,2 kPa (600 livres par pouce carré) et 700 °C, 38,7 kPa (550 livres par pouce carré) et 850 °C, et 24,6 kPa (350 livres par pouce carré) et 850 °C.

6. Procédé selon la revendication 1, caractérisé en ce que le matériau magnétique est constitué par un alliage nickel-fer, en ce que l'étape de serrage consiste à appliquer une pression de serrage d'au moins environ 35,2 kPa (500 livres par pouce carré), et en ce que l'opération de chauffage consiste à chauffer jusqu'à une température d'au moins 500 °C.

7. Procédé selon la revendication 6, caractérisé en ce que la pression de serrage et la température sont maintenues dans la zone définie, sur un graphe de la pression en fonction de la température, par la forme d'un quadrilatère ayant des sommets qui se trouvent environ à : 35,2 kPa (500 livres par pouce carré) et 500 °C, 38,7 kPa (550 livres par pouce carré) et 500 °C, 31,7 kPa (450 livres par pouce carré) et 625 °C, et 24,6 kPa (350 livres par pouce carré) et 625 °C.

8. Procédé selon l'une quelconque des revendications précédentes, caractérisé en ce que la couche de matériau magnétique est déposée par pulvérisation.

9. Procédé selon l'une quelconque des revendications précédentes, caractérisé en outre par le dépôt d'une couche formant barrière sur la couche de matériau magnétique avant de lier la couche de matériau magnétique à la face de l'autre des pièces en ferrite.
